# EUROPEAN PATENT SPECIFICATION

(11) **EP 2 234 423 B1**
(45) Date of publication and mention of the grant of the patent: **06.03.2019**
(21) Application number: 09004114.6
(22) Date of filing: 23.03.2009
(51) Int. Cl.: H04W 12/06, H04L 29/06, G06F 21/43, G06Q 20/32, G06Q 20/40, G07F 7/10

(54) **Secure identification over communication network**
Sichere Identifizierung über Kommunikationsnetzwerke
Indentification sécurisée sur un réseau de communication

(43) Date of publication of application: 29.09.2010
(73) Proprietor: Vodafone Holding GmbH, 40027 Düsseldorf (DE)
(72) Inventor: Lahaye, Paul, 5212 NH, Maastricht (NL); Koraichi, Najib, 6333, CT Schimmert (NL)
(74) Representative: Jostarndt Patentanwalts-AG

(56) References cited:
- EP-A- 1 282 026
- WO-A-2008/074342
- WO-A-2008/122627
- DE-U1-202005 021 262
- KR-A- 20020 063 345
- US-B1- 7 231 371
- KONSTANTIN HYPPÃNEN ET AL: "Pseudonymous Mobile Identity Architecture Based on Government-Supported PKI" TRUSTED COMPUTING - CHALLENGES AND APPLICATIONS; [LECTURE NOTES IN COMPUTER SCIENCE], SPRINGER BERLIN HEIDELBERG, BERLIN, HEIDELBERG, vol. 4968, 11 March 2008 (2008-03-11), pages 107-118, XP019089493 ISBN: 978-3-540-68978-2
- DELIC N ET AL: "Mobile Payment Solution - Symbiosis Between Banks, Application Service Providers and Mobile NetworkOperators" INFORMATION TECHNOLOGY: NEW GENERATIONS, 2006. ITNG 2006. THIRD INTERN ATIONAL CONFERENCE ON LAS VEGAS, NV, USA 10-12 APRIL 2006, IEEE, PISCATAWAY, NJ, USA, 10 April 2006 (2006-04-10), pages 346-350, XP010911381 ISBN: 978-0-7695-2497-9
- M. HASSINEN, K. HYPPÖNEN, E. TRICHINA: "Utilizing national public-key infrastructure in mobile payment systems" SCIENCEDIRECT ELSEVIER, July 2008 (2008-07), XP022688890

## Description

### Technical Field

The invention relates to a secure identification of an individual over a communication network. More specifically, the invention is related to a method and a system for providing identification data of an individual to a service over a communication network.

### Background of the invention

There is a growing interest for accessing administrative or governmental services, such as, for example, tax form filing or municipality services, online via a communication network, such as, for example, the Internet. Online access to such services renders it unnecessary to apply to the service provider and allows a user for accessing the service in a convenient way by means of his home PC (personal computer), for example, or by means of a mobile communication device when travelling.

However, services of the type described before usually require a secure identification of the user. When the user applies to the service provider or to the relevant authority, he usually has to identify himself using his identification card. The identification card comprises identification features, such as a photograph, a signature or biometric features, which can be compared to the corresponding features of the user. The identification card is issued by a trusted governmental authority and provides for a high security when verifying the identity of the user. When a service is accessed online, there is a need for a comparably secure mechanism for identifying the user of the service.

US 2003/0023858 A1 describes a method for creating and validating an electronic identification document. The document includes identification information of a user, an electronic signature and a digital certificate and is stored in a mobile communication device of the user in encrypted form. To validate the document, it is uploaded to an authorising machine, which decrypts the document and determines, if the document matches a non-encrypted version of the document residing in a repository.

The authorising machine in the method described before has to dispose of a copy of the electronic identification document in order to be able to verify that the correct document of the user has been provided. Thus, the user has to be registered in the authorising machine. Authorising machines that do not dispose of the copy of identification document cannot be used for securely identifying the user.

The publication K.Hyppönen at al., "Pseudonymous Mobile Identity Architecture Based on Government-Supported PKI" describes a SIM card having a certificate of a user stored therein. For providing proof of identity the certificate can be transmitted from the SIM card to a terminal of a service provider that checks the validity of the certificate. For connecting the mobile phone and the terminal the NFC technology is used.

WO 2008/074342 A1 discloses a method and an arrangement for secure user authentication. In a SIM card of a mobile phone, biometric data of a user is stored and used for verifying a biometric feature of the user which is taken by means of a peripheral device that communicates with the SIM card through a Bluetooth or a ZigBee connection. The result of the user authentication can be communicated from the mobile phone to an application server through a telecommunication network.

DE 202005021262 U1 relates to a system for validating a driving license of a user. The driving license includes a security element which can be read by means of a detection device through a radio connection. The detection device may be a mobile phone which can validate the read data and can transmit the validated data to a database.

EP 1282026 A2 discloses a user authentication method. In a SIM card of a mobile phone, a certificate of a user from an electronic identity is stored together with cryptographic data derived from information stored in the SIM card and in the electronic identity card. The data stored in the SIM card can be verified by a service provider using cryptographic operations.

KR 1020020063345 A relates to a method for buying articles by using both financial and ID card and a mobile phone. The user moves the card close to the mobile phone and a card reader recognizes the information on the card. This information is sent to a shopping server together with mobile phone user information if the card user information is equal to the mobile phone user information.

The publication M. Hassinen et al., "Utilizing national public-key infrastructure in mobile payment systems" describes a method in which a selection of a customer is sent from a mobile phone of the customer to a system of the merchant. The selection comprises a digital certificate stored in the SIM card of the customer's mobile phone. A payment order is sent from the merchant or the customer to a bank and comprises the customer's certificate and a signature of the merchant.

### Description of the invention

It is an object of the present invention to provide a secure mechanism for identifying an individual over a communication network towards a service, which does not dispose of registration of the user. The object is achieved by a method according to claim 1 and by a system according to claim 6. Embodiments of the method and the system are given in the dependent claims.

According to a first aspect, the invention suggests a method for providing identification data of an individual to a service over a communication network. The method comprises providing a device to the individual, the device being connectable to the mobile communication network and registered in the communication network. A code is allocated to the device in the communication network and the code is transmitted to the service from another device than the device the code is allocated to. Identification data included in an identification means of the individual are stored in the device and the identification data from the device to the service via the communication network using the registration of the device in the communication network. The identification data is transmitted to the service upon a request of the service, said request being addressed to the device using the code. The transmission of the identification data is allowed upon successful verification of an authorisation feature input into the device. According to a second aspect, the invention suggests a system for providing identification data of an individual to a service over a communication network. The system comprises a device of the individual, the device being connectable to the communication network and registered in the communication network. The device comprises a code being allocated to the device in the communication network. Further, the device comprises a memory unit storing a copy of identification data included in an identification means of the individual and a means for sending the identification data to the service via the communication network using the registration of the device in the communication network. The system further comprises a server providing the service. The server is adapted to receive the code, and the server being further adapted to request the device to provide the identification data, the request being addressed to the device using the code. The server is further adapted to request the device to provide the identification data, by means of the code received from another device than the device the code is allocated to. The system is arranged to send the identification data upon successful verification of an authorisation feature input into the device.

The invention involves the idea that a copy of identification data included in an identification means of an individual is stored in a device. Thereby, the identification means and the device are coupled to each other. Moreover, the identification data are coupled to the registration of a device in the communication network. This allows for a secure and trusted identification of the individual over the communication network using the device. In particular, the registration of the device in the communication network guarantees that the identification data are provided by an authorised device. A further registration of the device or the user with the service can be dispensed with.

Preferably, the identification means is issued by a trusted authority, particularly by a governmental authority. It may be configured as an electronic identification means. In particular, the electronic identification means may be an electronic passport of the individual. Thus, in this embodiment, electronic passport identification is provided over a communication network in a secure manner.

The code is allocated to the device in the communication network and the identification data is transmitted to the service upon a request of the service, the request being addressed to the device using the code. This is one advantageous example of using the registration of the device in the communication network for transmitting the identification data to the service. In particular, it is guaranteed that the identification data are provided by the device of the individual and not by another device. This efficiently prevents that a false identity is provided to the service in fraudulent intent. For instance, the code used for addressing the request may be an MSISDN (Mobile Subscriber Integrated Services Digital Network Number) allocated to the device in the communication network. In this case the communication network may be a mobile communication network, for example.

In one embodiment of the invention, the identification data are transferred from the electronic identification means to the device using a communication interface of the electronic identification means. This allows for a convenient transfer of the identification data to the device. In particular, the communication interface may be an interface for contactless communication and the identification data may transferred from the identification means to the device using contactless communication. The contactless communication may be based on the Near Field Communication (NFC) technology, for example, or another technology for contactless communication between electronic devices.

In a further embodiment of the invention, the device comprises an identification application, the identification application controlling the transmission of the identification data to the service via the communication network. Since in this embodiment a dedicated application for controlling the transmission of the identification data to the service is provided, the security of the transmission can be further increased.

In a related embodiment of the invention, a registration system initialises the identification application in response to a verification of the identification data stored in the device. Advantageously, in this embodiment, the identification application cannot be used unless the identification data stored in the device have been verified. Thereby, the integrity of the identification data stored in the device is guaranteed. In particular, it is ensured that the identification data stored in the device belong to the individual using the device. The verification of the identification data may be done by a trusted registration authority operating the registration system.

In one embodiment of the invention, the identification application is pre-installed in the device and is activated in response to a verification of an initialisation code provided by the registration system. This provides for a convenient initialisation of the identification application. The initialisation can also be done via the communication network. Here, the initialisation code may be transmitted to the device via the communication network.

The transmission of the identification data to the service is allowed upon successful verification of an authorisation feature input into the device. This prevents a third party from using the device to identify itself using the identity of the individual owning the device. The authorisation feature may be a personal identification number (PIN) or a password, for example.

The device is a SIM card connected to a mobile communication device and the communication network comprises a mobile communication network.

Here, the term SIM card refers to a smartcard being registered in the mobile communication network and providing services for identifying and/or authenticating a subscriber in the mobile communication network. The SIM card may comprise a SIM (Subscriber Identity Module) according to the GSM standard (GSM: Global System for Mobile Communications). However, the term SIM card, as used herein, is to be understood as including also smartcards comprising USIM applications according to the UMTS standard (USIM: Universal Subscriber Identity Module; UMTS: Universal Mobile Telecommunications System) or other applications providing authentication and/or identification functions in connection with a mobile communication network.

Advantageously, such SIM cards are already allocated to a subscriber and registered in the mobile communication network. Therefore, SIM cards are suited particularly well for being utilized as devices used in the present invention.

The aforementioned and other aspects of the invention will also be apparent from and elucidated with reference to the embodiments described hereinafter making reference to the drawings.

### Brief description of the drawings

Reference will be made by way of example to the accompanying drawings in which
- Fig. 1: is a schematic depiction of a system comprising a mobile communication device providing user identification to a server over a mobile communication network,
- Fig. 2: is a schematic diagram showing a registration of identification data of the user in the mobile communication device and
- Fig. 3: is a schematic diagram showing the identification of the user towards the server in the system shown in figure 1.

### Detailed description of embodiments of the invention

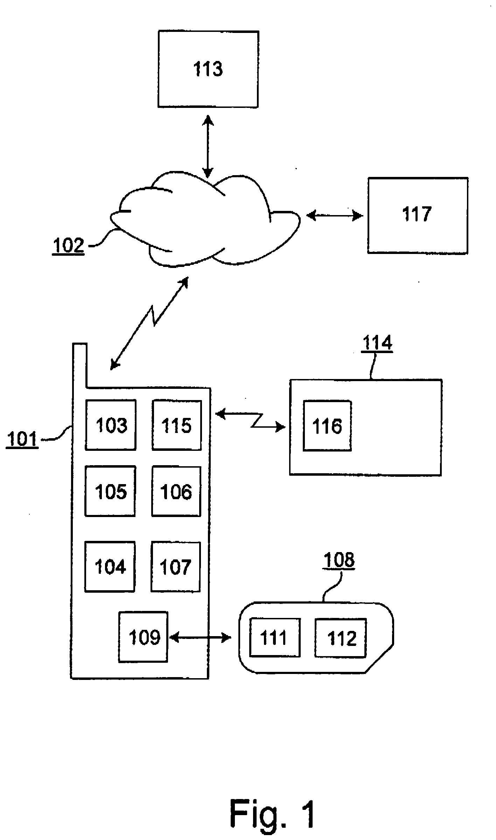

Figure 1 shows a mobile communication device 101 of a mobile user. The mobile communication device 101 may be a cellular phone, a personal data assistant (PDA), a laptop computer or the like.

The mobile communication device 101 can be connected to a mobile communication network (PLMN: Public Land Mobile Network) 102, which may be configured according to the GSM or UMTS standard, for example. For connecting the mobile communication device 101 to the PLMN 102, the mobile communication device 101 comprises a radio interface 103. The radio interface 103 is coupled to a main processor 104 for controlling the operation of the mobile communication device 101. For interacting with a mobile user, the mobile communication device 101 comprises an input component 105 and a display component 106, both coupled to the main processor 104. Applications run on the main processor 104 and further data are stored in a memory component 107 to which the main processor 104 has access.

The mobile communication device 101 interacts with a smartcard 108, which can be inserted into a card reader unit 109 of the mobile communication device 101. Although depicted outside the mobile communication device in figure 1, the smartcard 108 is usually inside the housing of the mobile communication device 101, when it is inserted into the card reader unit 109. As an alternative, the smartcard 108 is included in an add-on device, such as a dongle or an extension card, which can be connected to the mobile communication device 101 by means of a suitable interface.

As common for smartcards in general, the smartcard 108 comprises a microcontroller including a microprocessor 111 for running programmes and a memory 112 for storing the corresponding program codes and further data, particularly data used by the applications run on the microprocessor 111. The microcontroller provides a secure environment for the execution of applications and the storage of data. Particularly, this means that unauthorised access to data and processes is prevented due to the hardware design of the microcontroller and due to cryptographic mechanisms used for managing data and running applications in the microcontroller. Moreover, the microcontroller is integrated into a secure hardware environment provided by the smartcard 108, which is physically protected against manipulations, such as power analysis, reverse engineering etc.

The smartcard 108 is used in connection with mobile communications via the PLMN 102 and comprises a subscriber identification module allocated to the mobile user. In particular, the subscriber identification module includes information and services for identifying and authenticating the mobile user to the PLMN 102 and provides functionality for accessing services of the PLMN 102. The subscriber identification module may be configured in accordance with the type of PLMN 102. If the PLMN 102 is a GSM or UMTS network, the subscriber identification module is a SIM according to the GSM standard or comprises a USIM application according to the UMTS standard. In the PLMN 102, the smartcard 108 is registered under an allocated MSISDN, which is used to identify the smartcard, when establishing calls to the mobile communication device 101 or forwarding messages to the mobile communication device 101.

Hereinafter, the smartcard 108 is referred to as SIM card. However, the term SIM card, as used herein, is to be understood as including also smartcards 108 comprising USIM applications or corresponding applications providing similar functions in connection with a PLMN 102.

Via the PLMN 102 the mobile user can securely identify himself towards an online service offered by a server 113 connected to the PLMN 102. The server 113 may be configured as a web server and the service may be provided in form of a web service. In specific embodiments, the service provided by the server 113 may be a governmental service, such as, for example, online tax form filing or an online municipality service. However, the server 113 may also provide another service to the mobile user which requires secure identification. The user may access the service using his mobile communication device 101. However, it is likewise possible that the user accesses the service by means of another device, such as, for example, a personal computer that can be connected to the server via a network, such as, for example, the Internet. If another device is used for accessing the service, the mobile communication device 101 is only used for identifying the user towards the service.

The identification of the mobile user relies on an electronic identification means 114, which is issued to the mobile user by a trusted authority and which contains identification data of the mobile user. Such data may comprise one or more of the following features: the name of the user, his address, his date of birth, a photo of the mobile user and biometric features, such as, for example, the user's fingerprint. Preferably, the identification means 114 serves as a trusted identification card. In one embodiment, the identification means 114 is configured as an electronic passport, which is issued by a governmental authority. The electronic passport, which is also referred to as ePassport, may be configured as described in the standard document 9303, part 1, volume 2, of the International Civil Aviation Organization (ICAO), for example.

When the mobile user accesses the service provided by the server 113, identification data of the identification means 114 are provided to the server 113 by means of the mobile communication device 101 in a secure manner. For this purpose identification data included in the identification means 114 are securely stored in the SIM card 108 of the mobile communication device 101 and provided to the server 113 via the PLMN 102. The identification data stored in the SIM card 108 are sent to the sever 113 by means of a SIM card-resident identification application, which is initialised by a registration authority after having verified the correctness of the identification data stored in the SIM card 108.

By storing the identification data in the SIM card 108 and by providing an identification application that is likewise run in the SIM card 108, advantage can be taken of the security architecture of the SIM card 108. This means, that the security architecture of the SIM card 108 prevents third parties from accessing the identification data and from making fraudulent use thereof. Since the identification data is provided to the server 113 via the PLMN 102, advantage can be taken of the security mechanisms implemented in the PLMN 102. In particular, the SIM card 108 has to be properly registered in the PLMN 102 to be able to provide the identification data to the server 113. In case the mobile user loses his SIM card 108, the mobile operator may lock the SIM card, thereby preventing third persons to use the SIM card 108 and the identification data in fraudulent intent.

For storing the identification data in the SIM card 108, the data are copied from the identification means 114 to the SIM card 108, particularly to the memory 112 of the SIM card 108. In one embodiment, the identification means 114 and the mobile communication device 101 or the SIM card 108 comprise interfaces 115, 116 for contactless communication. If the communication interface 115 is not included in the SIM card 108, the SIM card 108 and the identification means communicate with each other via the mobile communication device 101 including the interface 115 as depicted in figure 1. The interfaces 115, 116 may be NFC interfaces, for example. The NFC technology, which is in general known to a person skilled in the art, allows for contactless communication between devices within a short range of typically a few centimetres.

In order to copy the identification data from the identification means 114 to the SIM card 108 the user connects the identification means 114 to the mobile communication device 101. In case the communication interfaces 115, 116 are configured as NFC interfaces, this is done by bringing the two devices 101, 114 in close proximity to each other. When a connection between the mobile communication device 101 and the identification means 114 is established, a reading application reads identification data from the identification means 114 and stores the data in the memory 112 of the SIM card 108. In order to read the data from the identification means 114, the reading application sends a request to the identification means 114 requesting the identification means 114 to provide the identification data. Upon receipt of the request, the identification means provides the relevant identification data to the reading application. Then, the identification data is stored in the SIM card 108. Preferably, the reading application is provided by the SIM card 108 and is started by the user using the input component 105 of the mobile communication device 101.

The identification means 114 may require the input of authentication data, such as, for example, a password or a PIN, to read the identification data. In this case, the request also contains the required authentication data. These data may be entered manually by the mobile user when starting the reading application or they may be pre-stored in the SIM card 108. Upon receipt of the request of the reading application the identification means 114 verifies the authentication data. If the authentication data have been verified successfully, the identification means 114 answers the received request by returning the identification data to the reading application.

After the identification data have been stored in the SIM card 108, the use of the data is unlocked by a registration authority. The registration authority verifies the identification means 114 of the mobile user and checks, whether the identification data contained in the identification means 114 are correctly stored in the SIM card 108. When the registration authority determines that the identification data are stored correctly in the SIM card 108, the identification application is initialised. Before it is initialised the identification application cannot be executed. Thus, the identification data stored in the SIM card 108 cannot be used unless the registration authority has verified the correctness of the identification data and has activated the identification application.

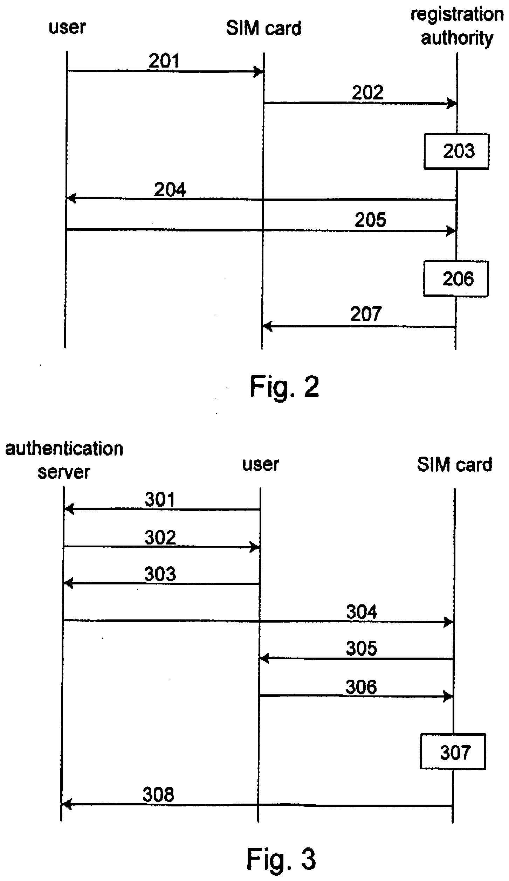

In one embodiment, the process of initialising the identification application will be described in the following referring to figure 2.

After the identification data have been copied to the SIM card 108, the mobile user starts a registration application of the SIM card 108 in step 201. The user may access the registration application by means of the input component 105 of the mobile communication device 101. When the registration application has been started, it generates a registration request and sends the registration request to the registration system 117 of the registration authority in step 202. The registration request comprises a copy of the identification data stored in the SIM card 108 and an identification information of the SIM card 108, such as, for example an ID code of the SIM card 108 or the MSISDN allocated to the SIM card 108. Preferably, the request is sent to the registration system 117 via the PLMN 102. For this purpose, the SIM card 108 accesses the radio interface 103 of the mobile communication device 101 in a manner known to a person skilled in the art.

Upon receipt of the registration request, the registration system 117 stores the data contained in the request in a database in step 203 and initiates the mailing of a registration letter to the mobile user. If the identification data contained in the registration request comprise the postal address of the mobile user, this address is used for addressing the registration letter. However, if the postal address of the mobile user is not contained in the identification data or if the mobile user wants the registration letter to be sent to another address, an address, which has been entered manually by the mobile user, is included in the registration request. The registration letter includes an activation code, which is also stored in the data base in allocation to the identification data of the user and the identification information of his SIM card 108. The registration letter is mailed to the mobile user in step 204.

When the mobile user has received the registration letter from the registration authority, he visits a registration desk of the registration authority in step 205 in order for the identification data stored in the SIM card 108 to be verified by personnel of the registration authority in step 206. The personnel verifies, whether the identification means 114 belongs to the mobile user. For this purpose, the personnel may use the photograph of the user included in the identification data, the personnel may compare biometric data stored in the electronic passport with the corresponding biometric features of the mobile user or the personnel may verify a signature of the user that is also present on the electronic passport. After the personnel has successfully verified that the mobile user is the owner of the identification means 114 and after having checked that the identification data contained in the presented identification means 114 is correctly stored in the SIM card 108, the personnel at the registration desk enters the activation code included in the registration letter into the registration system 117.

When the activation code has been entered into the registration system 117, the registration system 117 initialises the identification application, which is included in the SIM card 108 of the mobile communication device 101. in step 207. Preferably, the initialisation is done via the PLMN 102.

In one embodiment, the identification application is pre-stored in the SIM card 108 and can be activated by means of an initialisation code. The initialisation code may be a secret code shared between the identification application and the registration system 117, for example. As long as the initialisation code is not provided to the identification application, it cannot be executed. Upon entering of the activation code in the registration system, the registration system 117 sends the initialisation code to the mobile communication device 101 via the PLMN 102, and within the mobile communication device 101, the initialisation code is forwarded to the SIM card 108. The initialisation code is included in an initialisation message that may be addressed using the identification information of the SIM card 108, which may be the MSISDN allocated to the SIM card 108. In the SIM card 108, the activation code is verified and the identification application is activated in response to a successful verification of the activation code. The communication between the registration system 117 and the SIM card 108 may be cryptographically secured in a manner known to a person skilled in the art.

As an alternative, the identification application is not pre-installed in the SIM card 108 and the registration system 117 provides the identification application to the SIM card 108 for installation in step 207. Here, the so-called over-the-air (OTA) mechanism, which is in general known to a person skilled in the art, may be applied to install the identification application in the SIM card 108. The OTA technology is particularly described in the ETSI document TS 102 225 and in the 3GGP document TS 23.048 and allows for updating or changing data and/or applications in the SIM card 108 via the PLMN 102. Security against fraud is ensured by a cryptographic mechanism using cryptographic keys shared between the registration system 117 and the SIM card 108. In particular, the registration system 117 may encrypt the application data using a key, which is shared between the registration system 117 and the SIM card 108. The SIM card 108 decrypts the data using a corresponding decryption key, thereby confirming that the data originates from the registration system 117.

When the identification application is initialised, a user authentication is required to access the identification application in the SIM card 108. In one embodiment, the identification application can only be used after an authentication feature, such as, for example, a password or a PIN entered by the user has been successfully verified. The authentication feature may be pre-installed in the SIM card 108 and the registration authority may notify the mobile user of the authentication feature after the identification application has been initialised, In another embodiment, the identification application requests the mobile user to set an authentication feature of his choice.

The use of the identification application will now be described referring to figure 3. In step 301, the user accesses a service provided by the server 113, which requires secure user identification. As described before, the user may access the service using his mobile communication device 101 or the user may access the service using another device, which is connectable to the server 113. When accessing the service, the server 113 requests the mobile user to identify himself in step 302. For the purpose of identifying the user, the service may offer different identification mechanisms and one mechanism is the user identification by means of the identification application. The existing alternatives are presented to the user: Thereupon, the user selects the identification by means of the identification application. Moreover, the MSISDN assigned to the SIM card 108 is transmitted to the server in step 303. For this purpose, the user may be requested to enter the MSISDN, when he accesses the service using another device than the mobile communication device 101. If the service is accessed using the mobile communication device, the MSISDN may be provided to the server 113 when a connection is established between the server 113 and the mobile communication device 101.

Then, the server 113 generates an identification request and sends the identification request to the SIM card 108 via the PLMN 102 in step 304. In one embodiment, the server 113 may request specific identification data included in the identification data stored in the SIM card 108. However, it may likewise be possible that all identification data stored in the SIM card 108 are provided to the server 113 upon request. The request is addressed to the SIM card 108 using the MSISDN entered by the user in step 303. The request is received in the mobile communication device 101 and forwarded to the SIM card 108 within the mobile communication device 101.

Upon receipt of the identification request in the SIM card 108, the identification application recognizes the identification request and requests the mobile user to enter the authentication feature in step 305. Together with the request to enter the authentication feature, the user may be informed that the service is requesting user identification. In response to the request, the user enters the authentication feature using the input component 105 of the mobile communication device 101 in step 306. The entered authentication feature is passed to the identification application and the identification application verifies the authentication feature in step 307.

After the authentication feature has been verified successfully, the identification application generates a message including identification data of the mobile user stored in the SIM card 108. The message may contain all identification data or only a part thereof, when the server 113 requests a special identification feature of the mobile user. The message is sent to the server 113 via the PLMN 102 in step 308. In one embodiment, the message is addressed using an MSISDN allocated to the server 113. The MSISDN may be included in the request message sent from the server to the SIM card 108 in step 304.

When the server 113 receives the message containing the identification data of the mobile user, the server 113 allows the mobile user to utilise the service under the communicated identity in step 310. If admission to use the service depends on the identity of the user, the server 113 checks whether the user is allowed to access the service based on the received identification data. If the check is successful, the server 113 allows the mobile user to utilise the service.

Preferably, the communication between the server 113 and the mobile communication device 101 or the SIM card 108 is cryptographically secured. Here, cryptographic techniques may be used, which are in principle known to a person skilled in the art. For instance, the server 113 and the SIM card 108 may agree on a session key, which may be used for encrypting and decrypting the identification data and other user related data, which are transmitted from the SIM card 108 to the server 113 or vice versa.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. A method for providing identification data of an individual to a service over a mobile communication network (102)
using a device (108) of the individual, the device (108) being connectable to the mobile communication network (102) by means of a mobile communication device (101) the device (108) is connected to, wherein the device (108) is a SIM card connected to the mobile communication device (101) registered in the communication network (102), wherein
a code is allocated to the device (108) in the communication network (102), wherein the code is transmitted to a server (113) providing the service from another device than the mobile communication device (101) connected to the device (108) the code is allocated to, the another device being used by the individual to access the service, wherein identification data included in an identification means (114) of the individual is stored in the device (108) and the identification data is transmitted from the device (108) to the server (113) via the mobile communication network (102) using the registration of the device (108) in the mobile communication network (102), and wherein the identification data is transmitted to the server upon an identification request received from the server, said identification request being addressed to the device (108) using the code, wherein the transmission of the identification data is allowed upon successful verification of an authorisation feature input into the mobile communication device (101) in response to the identification request.

2. The method according to claim 1, wherein the identification data are transferred from the electronic identification means (114) to the device (108) using contactless communication between the electronic identification means (114) and the device (108).

3. The method according to one of the preceding claims, wherein the device (108) comprises an identification application, the identification application controlling the transmission of the identification data to the server (113) via the mobile communication network (102).

4. The method according to claim 3, wherein a registration system (117) initialises the identification application in response to a verification of the identification data stored in the device (108).

5. The method according to claim 3 or 4, wherein the identification application is pre-installed in the device (108) and is initialised in response to a verification of an initialisation code provided by the registration system (117).

6. A system for providing identification data of an individual to a service over a mobile communication network (102), the system comprising a device (108) of the individual, wherein the device (108) is a SIM card connected to a mobile communication device (101), the device (108) being connectable to the mobile communication network (102) by means of the mobile communication device (101) and registered in the mobile communication network (102),and the device comprising a code being allocated to the device (108) in the communication network (102), and the device (108) comprising a memory unit storing a copy of identification data included in an identification means (114) of the individual; and a means for sending the identification data to the service via the mobile communication network (102) using the registration of the device (108) in the mobile communication network (102), comprising a server (113) providing the service, the system further comprising a server (113) providing the service, the server being adapted to receive the code, and the server being further adapted to request the device (108) to provide the identification data, the request being addressed to the device (108) using the code, wherein the server is further adapted to request the device (108) to provide the identification data, by means of the code received from another device than the mobile communication device (101) connected to the device (108) the code is allocated to, the another device being used by the individual to access the service, wherein the device of the individual is arranged to send the identification data, via the mobile communication network (102), upon successful verification of an authorisation feature input into the mobile communication device (101) in response to the identification request.

7. The system according to claim 6, wherein the device (108) further comprises an identification application adapted to send the identification data to the server (113), the identification application being initialised by a registration system (117) in response to a verification of the identification data stored in the device (108).

8. The system according to one of the claims 6 to 7, further comprising an electronic identification means (114) of the individual including an interface for transmitting identification data stored therein to the device (108).

## Patentansprüche

1. Verfahren zum Bereitstellen von Identifikationsdaten eines Individuums an einen Dienst über ein Mobilkommunikationsnetz (102) mithilfe einer Vorrichtung (108) des Individuums, wobei die Vorrichtung (108) mittels einer Mobilkommunikationsvorrichtung (102), mit der die Vorrichtung (108) verbunden ist, mit dem Mobilkommunikationsnetz (102) verbindbar ist, wobei die Vorrichtung (108) eine SIM-Karte ist, die mit der in dem Kommunikationsnetz (102) registrierten Mobilkommunikationsvorrichtung (101) verbunden ist, wobei
der Vorrichtung (108) in dem Kommunikationsnetz (102) ein Code zugewiesen ist, wobei
der Code an einen Server (113) übermittelt wird, der den Dienst von einer weiteren Vorrichtung bereitstellt, die nicht die Mobilkommunikationsvorrichtung (101) ist, die mit der Vorrichtung (108) verbunden ist, der der Code zugewiesen ist, wobei die andere Vorrichtung von dem Individuum verwendet wird, um auf den Dienst zuzugreifen,
wobei
in einem Identifikationsmittel (114) enthaltene Daten des Individuums in der Vorrichtung (108) gespeichert werden, und die Identifikationsdaten über das Mobilkommunikationsnetz (102) mithilfe der Registrierung der Vorrichtung (108) in dem Mobilkommunikationsnetz (102) von der Vorrichtung (108) an den Server (113) übermittelt werden, und wobei die Identifikationsdaten bei einer vom Server empfangenen Identifikationsaufforderung an den Server übermittelt werden,
wobei die Identifikationsaufforderung mithilfe des Codes an die Vorrichtung (108) gerichtet wird, wobei die Übermittlung der Identifikationsdaten bei einer erfolgreichen Überprüfung eines Berechtigungsmerkmals, das als Reaktion auf die Identifikationsaufforderung in die Mobilkommunikationsvorrichtung eingegeben wird, zulässig ist.

2. Verfahren nach Anspruch 1, wobei die Identifikationsdaten mithilfe von berührungsloser Kommunikation zwischen dem elektronischen Identifikationsmittel (114) und der Vorrichtung (108) von dem elektrischen Identifikationsmittel (114) an die Vorrichtung (108) übertragen werden.

3. Verfahren nach einem der vorstehenden Ansprüche, wobei die Vorrichtung (108) eine Identifikationsanwendung aufweist, wobei die Identifikationsanwendung die Übermittlung der Identifikationsdaten an den Server (133) über das Mobilkommunikationsnetz (102) steuert.

4. Verfahren nach Anspruch 3, wobei ein Verzeichnissystem (117) die Identifikationsanwendung als Reaktion auf eine Überprüfung der in der Vorrichtung (108) gespeicherten Identifikationsdaten initialisiert.

5. Verfahren nach Anspruch 3 oder 4, wobei die Identifikationsanwendung in der Vorrichtung (108) vorinstalliert ist, und als Reaktion auf eine Überprüfung eines von dem Registrierungssystem (117) bereitgestellten Initialisierungscodes initialisiert wird.

6. System zum Bereitstellen von Identifikationsdaten eines Individuums an einen Dienst oder über ein Mobilkommunikationsnetz (102), wobei das System eine Vorrichtung (108) des Individuums aufweist, wobei die Vorrichtung (108) eine mit einer Mobilkommunikationsvorrichtung (101) verbundene SIM-Karte ist, wobei die Vorrichtung (108) mittels der Mobilkommunikationsvorrichtung (101) mit dem Mobilkommunikationsnetz (102) verbunden werden und in dem Mobilkommunikationsnetz (102) registriert ist, und wobei die Vorrichtung einen Code aufweist, der der Vorrichtung (108) in dem Kommunikationsnetz (102) zugewiesen ist, und die Vorrichtung (108) eine Speichereinheit aufweist, die eine Kopie der in einem Identifikationsmittel (114) des Individuums gespeicherten Identifikationsdaten speichert; und ein Mittel zum Senden der Identifikationsdaten, über das Mobilkommunikationsnetz (102) an den Dienst mithilfe der Registrierung der Vorrichtung (108) in dem Mobilkommunikationsnetz (102), aufweisend einen Server (113), der den Dienst bereitstellt, wobei das System ferner einen Server (113) aufweist, der den Dienst bereitstellt, wobei der Server eingerichtet ist, den Code zu empfangen, und der Server ferner eingerichtet ist, die Vorrichtung (108) aufzufordern, die Identifikationsdaten bereitzustellen, wobei die Aufforderung mittels des Codes an die Vorrichtung (108) gerichtet wird, wobei der Server ferner eingerichtet ist, die Vorrichtung (108) mittels des von einer anderen Vorrichtung als der mit der Vorrichtung (108), der der Code zugewiesen ist, verbundenen Mobilkommunikationsvorrichtung (101) empfangenen Codes aufzufordern, Identifikationsdaten bereitzustellen, wobei die andere Vorrichtung durch das Individuum genutzt wird, um auf den Dienst zuzugreifen, wobei die Vorrichtung des Individuums eingerichtet ist, die Identifikationsdaten über das Mobilkommunikationsnetz (102) bei erfolgreicher Überprüfung eines Berechtigungsmerkmals, das der Mobilkommunikationsvorrichtung (101) als Reaktion auf die Identifikationsaufforderung eingegeben wird, zu senden.

7. System nach Anspruch 6, wobei die Vorrichtung (108) ferner eine Identifikationsanwendung aufweist, die eingerichtet ist, die Identifikationsdaten an den Server (113) zu senden, wobei die Identifikationsanwendung von einem Registrierungssystem (117) als Reaktion auf eine Überprüfung der in der Vorrichtung (108) gespeicherten Identifikationsdaten initialisiert wird.

8. System nach einem der Ansprüche 6 bis 7, ferner aufweisend ein elektrisches Identifikationsmittel (114) des Individuums mit einer Schnittstelle zum Übermitteln von in dieser gespeicherten Identifikationsdaten an die Vorrichtung (108).

## Revendications

1. Procédé de fourniture de données d'identification d'un individu à un service sur un réseau de communications mobiles (102) au moyen d'un dispositif (108) de l'individu, le dispositif (108) pouvant être connecté au réseau de communications mobiles (102) au moyen d'un dispositif de communications mobiles (101) auquel le dispositif (108) est connecté, dans lequel le dispositif (108) est une carte SIM connectée au dispositif de communications mobiles (101) enregistré dans le réseau de communications (102), dans lequel un code est attribué au dispositif (108) dans le réseau de communications (102), dans lequel
le code est transmis à un serveur (113) fournissant le service à partir d'un autre dispositif que le dispositif de communications mobiles (101) connecté au dispositif (108) auquel le code est attribué, l'autre dispositif étant utilisé par l'individu pour accéder au service, dans lequel
des données d'identification incluses dans un moyen d'identification (114) de l'individu sont stockées dans le dispositif (108) et les données d'identification sont transmises à partir du dispositif (108) au serveur (113)
via le réseau de communications mobiles (102) au moyen de l'enregistrement du dispositif (108) dans le réseau de communications mobiles (102), et dans lequel les données d'identification sont transmises au serveur lorsqu'une demande d'identification est reçue à partir du serveur, ladite demande d'identification étant adressée au dispositif (108) au moyen du code, dans lequel la transmission des données d'identification est permise lors du succès de la vérification d'un élément d'autorisation entré dans le dispositif de communications mobiles (101) en réaction à la demande d'identification.

2. Procédé selon la revendication 1, dans lequel les données d'identification sont transférées à partir du moyen d'identification électronique (114) au dispositif (108) au moyen d'une communication sans contact entre le moyen d'identification électronique (114) et le dispositif (108).

3. Procédé selon l'une quelconque des revendications précédentes, dans lequel le dispositif (108) comprend une application d'identification, l'application d'identification commandant la transmission des données d'identification au serveur (113) via le réseau de communications mobiles (102).

4. Procédé selon la revendication 3, dans lequel un système d'enregistrement (117) initialise l'application d'identification en réponse à une vérification des données d'identification stockées dans le dispositif (108).

5. Procédé selon la revendication 3 ou 4, dans lequel l'application d'identification est pré-installée dans le dispositif (108) et est initialisée en réponse à une vérification d'un code d'initialisation fourni par le système d'enregistrement (117).

6. Système pour fournir des données d'identification d'un individu à un service sur un réseau de communications mobiles (102), le système comprenant un dispositif (108) de l'individu, dans lequel le dispositif (108) est une carte SIM connectée à un dispositif de communications mobiles (101), le dispositif (108) pouvant être connecté au réseau de communications mobiles (102) au moyen du dispositif de communications mobiles (101) et enregistré dans le réseau de communications mobiles (102), et le dispositif comprenant un code étant attribué au dispositif (108) dans le réseau de communications (102), et le dispositif (108) comprenant une unité de mémoire stockant une copie de données d'identification, lesdits données incluses dans un moyen d'indentification (114) de l'individu ; et un moyen pour envoyer les données d'identification au service via le réseau de communications mobiles (102) au moyen de l'enregistrement du dispositif (108) dans le réseau de communications mobiles (102), comprenant un serveur (113) fournissant le service, le système comprenant en outre un serveur (113) fournissant le service, le serveur étant adapté à recevoir le code, et le serveur étant en outre adapté pour demander le dispositif (108) de fournir les données d'identification, la demande étant adressée au dispositif (108) au moyen du code, dans lequel le serveur est en outre adapté à demander au dispositif (108) de fournir les données d'identification, au moyen du code reçu d'un autre dispositif que le dispositif de communications mobiles (101) connecté au dispositif (108) auquel le code est attribué, l'autre dispositif étant utilisé par l'individu pour accéder au service, dans lequel le dispositif de l'individu est configuré pour envoyer les données d'identification, via le réseau de communications mobiles (102), lors du succès de la vérification d'un élément d'autorisation entré dans le dispositif de communications mobiles (101) en réaction à la demande d'identification.

7. Système selon la revendication 6, dans lequel le dispositif (108) comprend en outre une application d'identification configurée pour envoyer les données d'identification au serveur (113), l'application d'identification étant initialisée par un système d'enregistrement (117) en réaction à une vérification des données d'identification stockées dans le dispositif (108).

8. Système selon l'une des revendications 6 à 7, comprenant en outre un moyen d'identification électronique (114) de l'individu comprenant une interface pour transmettre des données d'identification stockées dans celui-ci au dispositif (108).
